# EUROPEAN PATENT APPLICATION

(11) **EP 0 588 021 A2**
(43) Date of publication of application: **23.03.1994**
(21) Application number: 93111673.5
(22) Date of filing: 21.07.1993
(51) Int. Cl.: G06F 15/16, G06F 13/40

(54) **Switch-based personal computer interconnection apparatus**

(30) Priority: 17.09.1992 US 946512
(71) Applicant: International Business Machines Corporation, Armonk, N.Y. 10504 (US)
(72) Inventor: Olnowich, Howard Thomas, Endwell, New York 13760 (US); Fisher, Michael Hans, Rochester, MN 55901 (US); Lusch, Robert Francis, Vestal, New York 13850 (US); Maniguet, Michael Anthony, Owego, New York 13827 (US); Saiyid, Omar Aziz, Reston, Virginia 22094 (US)
(74) Representative: Schäfer, Wolfgang, Dipl.-Ing.

(57) **Abstract**

Disclosed is a modularly expandable switch-based apparatus which is used to interconnect multiple Personal Computers as nodes of a parallel system. The invention includes a bus-based expansion card which is inserted into a card slot in each of the Personal Computers to provide an adaption from the Personal Computer MicroChannel to the interface to a multi-stage switch network. Thus, the disclosed invention provides a means for extending the MicroChannel architectures to either massively parallel systems or thousands of I/O device taps or a combination of the two. This is accomplished by using electronic switches to interconnect various Personal Computers, where each computer has a unique local bus that can be composed of 1 to 8 MicroChannel taps (card slots). An expansion card containing a bus architecture converter unit is used in one expansion card slot in each Personal Computer to adapt the node to the switch network. The result is that the Personal Computers are fully interconnected and capable of sending data, communications, and/or messages between any two Personal Computers, which become nodes of the parallel system.

## Description

### FIELD OF THE INVENTION

The present invention relates to personal computer and workstation systems and the ability to cluster many systems to perform high speed, low-latency communications with each other in a parallel fashion over switching networks.

### GLOSSARY OF TERMS

### Card slots

Receptacle connectors internal to a PC or workstation for the purpose of receiving expansion cards for attachment and expansion of the internal I/O bus.

### Expansion Card

A board of components that function together as a co-processing or I/O element. The card board has multiple wiring planes used to interconnect all components mounted on the board. The card board has a connector element used to connect the card to the planar (usually the card connector is inserted into the planar connector receptacle). The active components on the card usually include a co-processing and/or I/O element, remote memory, and an I/O interface in the form of a multi-drop bus that connects to the planar through the card connector for communication to other processor or I/O cards.

### I/O

Abbreviation for input/ output

### MicroChannel

The IBM Trademark for the specific I/O, multi-drop bus used in most IBM PCs and workstations. In the description MicroChannel refers to a multi-drop bus.

### MC

Abbreviation for MicroChannel

### MicroChannel Converter

A functional converter that converts the standard MicroChannel bus interface and protocol to the switching network interface and protocol.

### MCC

Abbreviation for MC Converter

### MicroChannel Island

The MicroChannel Bus that resides entirely within a given PC or workstation.

### MI

Abbreviation for MicroChannel Island

### Node

A functional element of the system comprised of one personal computer or workstation providing a standard bus interface, which is used to connect to various input/output devices including the switching network of the present invention.

### Nodal element

Another term for node, which has the same meaning.

### PC

Abbreviation for Personal Computer

### Port

A single bi-directional entry and exit point to a switching netwrok.

### Receiving Node

A functional element of the system comprised of one or more processor and/or expansion cards interconnected by a standard bus to a switching network, which is receiving data transmitted over the switching network.

### Sending Node

A functional element of the system comprised of one or more processor and/or expansion cards interconnected by a standard bus to a switching network, which is transmitting data over the switching network.

### BACKGROUND OF THE INVENTIONS

Multi-stage switching networks are gaining acceptance as a means for inter-connecting multiple devices within modern digital computing systems. In particular, in parallel systems it is common to use a multi-staged switching network to interconnect n system elements, where n can be several or thousands of processors or combinations of processors and other system elements.

The state-of-the-art interconnection approaches have centered around multi-drop busses, which have many short comings, the primary of which is limited performance and expansion. The problem exists in bus-based processors that there is an ever increasing need for better I/O bus performance and the attachment of more I/O options. This is in direct conflict with the nature of a multi-drop bus technology, which loses performance as more and I/O options are added as taps to the bus. In general, standard bus architectures such as the MicroChannel (IBM Trademark) have selected a performance goal and thus limited the number of I/O taps permissable at that performance level. In the case of the MicroChannel the result is that 8 taps is the maximum number of allowable bus taps to permit bus operations to occur at 200ns cycle times.

As a result, based-based system users are beginning to find that the I/O capability is not sufficient to meet their needs. For years people having been looking for means of increasing the I/O capability of bus-based systems.

Bus-based sytem performance is limited because only one user can have access to the bus at any given time. The expandability is limited because of the electrical characteristics of the multi-drop bus including drive capability, noise and reflections. A bus must be used internally for a Personal Computer (PC) or workstation, and cannot be extended outside of the packaging enclosure for the purpose of expanding the PC's or workstation's ability to increase it's I/O capability or to communicate directly with other PCs or workstations. Instead, an expansion card must be used interanal to the PC or workstation and inserted into a card slot to interface with the internal bus and to provide a different interface for external expansion.

On the other hand, PCs and workstations are relatively inexpensive and constantly increasing in processor performance capabilities. These machines and their expansion cards represent investment dollars, and owners wish to use and build on this investment for many years. The present invention provides a means of using each bus-based machine as one node of a many noded parallel system. This is accomplished by interconnecting multiple PCs or workstations through an expansion card in each PC or workstation which connects to a high speed switching network and enables the individual bus-based systems to communicate with low-latency and interact as a parallel system. This allows for use of investment, yet it overcomes all the limitations placed upon a single bus-based architecture. Thus, the present invention is used to expand either the computer I/O capability or to improve performance through parallel operation of multiple PCs or workstations being clustered together via a parallel, high speed network.

The state-of-the-art interconnection solutions for multiple PCs and workatations involve serial, high-latency Token Ring and Ethernet connections. However, they do not provide the parallel characteristics and low-latency concepts required for modern interconnect systems. The characteristics that are required include the ability to dynamically and quickly establish and break element interconnections, to do it cheaply and easily in one chip, to have expandablity to many thousands of elements, to permit any length, non-calibrated interconnection wire lengths, to solve the distributed clocking problems and allow future frequency increases, and to permit parallel establishment and data transmittal over N switching paths simultaneously.

The distributed and fully parallel switch utilized herein to provide the required interconnect properties is the ALLNODE Switch (Asynchronous, Low Latency, inter-NODE switch), which is disclosed in USSN 07/677,543 and adapted by the present invention to perform the switching of converted bus interfaces at low latencies and high bandwidths. The ALLNODE switch provides a circuit switching capability at high bandwidths, and includes distributed switch path connection set-up and tear-down controls individually within each switch - thus providing parallel set-up, low latency, and elimination of central point failures. We will further describe in the detailed description a way whereby the ALLNODE switch and the present invention can be used to solve the bus-based processor interconnection problem effectively.

Amongst the most commonly used networks fro digital communication between processors are the Ethernet or Token Ring LAN networks. "Ethernet: Distributed Packet Switching for Local Computer Networks" Communicationsof the ACM, July 1976, Vol.19, No. 7, pp 393 - 404; and "Token-Ring Loacal-Area Networks and Their Performance" , W. Bux, Proceedings of the IEEE, Vol. 77, No.2, February 1989, pp 238-256; are representative articles which describe this kind of network, which provide a serial shared medium used by one node at a time to send a message to another node or nodes. The present invention is a replacement for this the Ethernet and Token-Ring networks that supports a parallel medium capable of multiple simultaneous transfers.

US Patent 4,803,485 - LAN COMMUNICATION SYSTEM, represents one LAN approach which use of the present inventions would replace. This patent describes a medium conversion adapter similar to the present invention, but for adapting various bus protocols to a communication system having multiple transmission media segments in a ring configuration, like a token ring or LAN. The present invention differs in that it adapts multiple transmission segments in an unbuffered multi-stage parallel transfer configuration, that gets latencies in the sub-microsecond range, rather than in the millisecond range of LAN's. This differences will be of value in the future.

### SUMMARY OF THE INVENTIONS

The present invention is a modularly expandable switch-based apparatus including a bus-based expansion card which is inserted into a card slot in each of multiple PC or workatation machines. The multiple machines are then interconnected via the said expansion cards providing a switch interface to a multi-stage switch network.

In particular, the disclosed invention provides a means for extending the MicroChannel (IBM Trademark) Bus architecture to either massively parallel systems or thousands of I/O device taps or a combination of the two. This is accomplished by using electronic switches to interconnect various "MicroChannel Islands" (MI), where each MI is a unique MicroChannel (MC) that can be composed of 1 to 8 multi-drop bus taps (card slots), depending on how many card slots the particular PC or workstation model implements. In other words, the new extended MicroChannel becomes a sea of a few or many MC multi-drop busses (MI's) interconnected to each other by a switching networks. An expansion card containing a MicroChannel Converter (MCC) unit is used to adapt each MI to the switch network. The result is that all MIs are fully interconnected and capable of sending data, communications, and/or messages between any two PCs or workstations, which become nodes of the parallel system. The communication media is switch-based and is fully parallel, supporting n transmissions simultaneously, where n is the number of nodes interconnected by the switching network.

The perferred switching means is the basic digital asynchronous and unbuffered switching concept disclosed in USSN 07/677,543, "All-Node Switch, An Unclocked, Unbuffered Asychronous Switching Apparatus" by H.T. Olnowich et al. The Allnode Switching apparatus provides a switching network communication structure that has the characteristic of simplicity of implementation, and does not require data buffering or data conversion of any kind. It establishes or breaks connections instantaneously and is, therefore, dynamically changeable with a very quick response time. It has the capability of resolving requests to establish connections in a parallel manner, where n connections can be established or broken at the same time (where n = the number of elements of the system which are communicating via the switching network). Thus, the number of connections that can be made or broken simultaneously scales directly with the size of the system. This capability enables the invention apparatus to handle multiple short messages very efficiently. In addition, the new apparatus is devoid of synchronization requirements or wire length restrictions. It also has the ability to track the speed improvements of new technologies and to increase performance as the technology used to implement the invention apparatus improves. In addition, the Allnode switching apparatus can be cascaded with other identical apparatus devices to form interconnection networks among any number of system elements or nodes. Said network would have the characteristics for full parallel interconnection.

### BRIEF DESCRIPTION OF THE DRAWINGS

- Fig. 1: illustrates generally our preferred embodiment of the present invention of multiple MicroChannel Islands which are multi-drop bus based connections, themselves being interconnected via a multi-stage switching network.
- Fig. 2: illustrates a four input and four output (4 X 4) crossbar switching apparatus, which has the capability of providing the disclosed fully parallel switching means for interconnecting up to four nodes.
- Fig. 3: illustrates the interconnections required to a four input and four output (4 X 4) crossbar switching apparatus to provide full interconnection amongst four nodes.
- Fig. 4: shows a typical method for cascading the 4x4 disclosed embodiment of the invention switching apparatus to accomodate systems having more than 4 nodes.
- Fig. 5: shows a schematic block diagram of the simple digital data flow and control path implementations of the 4x4 crossbar switching apparatus, which has the capability of being used with the present invention to provide fully parallel switching means for interconnecting up to four system nodes for the purpose of transferring digital data.
- Fig. 6: illustrates a typical method for generating parallel control and multiple line serial digital data information to be sent to the 4x4 switching apparatus over four synchronous data lines.
- Fig. 7: shows a typical timing diagram for routing the digital interface signals arriving at one input port of the 4x4 switching apparatus to one output port.
- Fig. 8: illustrates the typical method of selecting and establishing a transmission path through a network comprised of the invention switching apparatus for the purpose of sending digital data from one node to another.
- Fig. 9: illustrates generally an alternative embodiment of the present invention of interconnecting multi-drop busses via a multi-stage switch network, where two or more paths from each multi-drop bus can be provided.

### DETAILED DESCRIPTION OF THE PREFERRED EMBODIMENTS

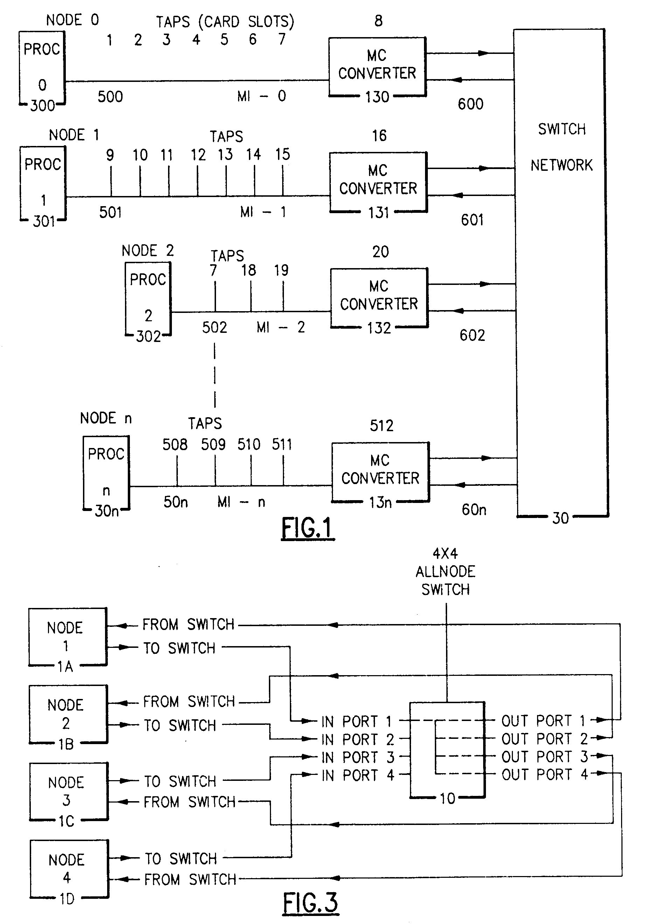

Turning now to the drawings in greater detail, Fig. 1, shows the preferred method of interconnecting n PCs and/or workstations as nodes of a parallel system via the multi-stage switch network 30. The entire system is composed of n individual nodes, where each node is comprised of a PC and/or workstation consisting of a processor with its associated MicroChannel I/O bus. Node 0 is comprised of processor 300 and MC Bus 500, Node 1 is comprised of processor 301 and MC Bus 501, Node 2 is comprised of processor 302 and MC Bus 502, and Node n is comprised of processor 30n and MC Bus 50n, where is is theorectically an unbounded positive integer. Each MC Bus 500 to 50n is connected to an individual MicroChannel Converter unit, with MC bus 500 connecting to MCC 130, MC bus 501 connecting to MCC 131, MC bus 502 connecting to MCC 132, and MC bus 50n connecting to MCC 13n. These individual MC Busses are referred to as MicroChannel Islands, which are separate busses interconnected by a sea of switch network. Each MCC 130 to 13n has second and third interfaces which connect to an input and and ouput port, respectively, of unidirectional switch network 30.

A typical node is shown to consist of a variable number of card slots in the form of taps to/from the MC Bus, with the number of taps being individually selectable at each node and usually being between 1 to 8 taps per MC Bus, depending upon the PC or workstation model being used. The MCC 130 to 13n blocks represent MC expansion cards that require the usage of one of the cards slots on each MC Bus 500 to 50n. The remaining cards slots in each MC Bus 500 to 50n can be populated by any combination of standard MC expansion cards or left unoccupied.

The MCC 130 to 13n cards serves a bridge from the MC to the switch network having both MC and switch interfaces, and the MCC blocks implement the hardware which enables the MC and switch interfaces to work together to transfer data messages to and from the associated node to other nodes connected to switch network 30. The primary function of each MCC unit is to convert node address or memory addresses or I/O addresses presented by the initiating MicroChannel into a means of locating the exact MI, where the the addressed processor, memory location, or I/O device resides. The MCC block then controls the transferred of data to the selected processor, memory location, or I/O device. The MCC also responds to any network transfers sent to it, and relays the transfer through the MC Bus to the proper destination - processor, memory location, or I/O device. At the destination, the adapter receives a transfer from the switch network and can either interrupt the proper destination tap on the destination MI, or arbitrate for the local MI and send the transfer directly to the addressed tap.

A typical data transfer from one node to another, for instance - node 0 to node 2, would include the following steps. The sending node 0 would communicate to its local microchannel bus 500 using standard microchannel bus sequences. MCC 130 would respond to these sequences and convert them to sequences and protocols which are understood by switch network 30 as communicated over interface 600. Thus, the communication from node 0 is passed over MC bus 500 to MCC 130, which converts the communication format and passes it on to the switch network 30 over interface 600. Switch network 30 is commanded by MCC 130 to form a connection to the receiving node 2, causing network 30 to pass the communication data through switch network 30 onto switchinterface 602. The data is then received by MCC 132, converted back into a standard MC format, and passed over MicroChannel bus 502 to receiving node 2.

Interfaces 600 to 60n to and from switch network 30 provide an expansion interface for every PC or workstation, whereby it can communicate to processors, memory locations, and I/O devices which no longer need be resident on its own MicroChannel Island, but can be located anywhere within the interconnection range of switch network 30.

There are two possible implementations of the MicroChannel Converter (MCC) units - either master or slave. The functional details of these MicroChannel Converter units are detailed in separate concurrently filed applications:
"MASTER CONVERTER APPARATUS FOR CONVERTING MICROCHANNEL BUS TO SWITCH ARCHITECTURE" by H.T. Olnowich et al, IBM Docket EN 9-92-0126
"SLAVE CONVERTER APPARATUS FOR CONVERTING MICROCHANNEL BUS TO SWITCH ARCHITECTURE" by H.T. Olnowich et al, IBM Docket EN9-92-0125.

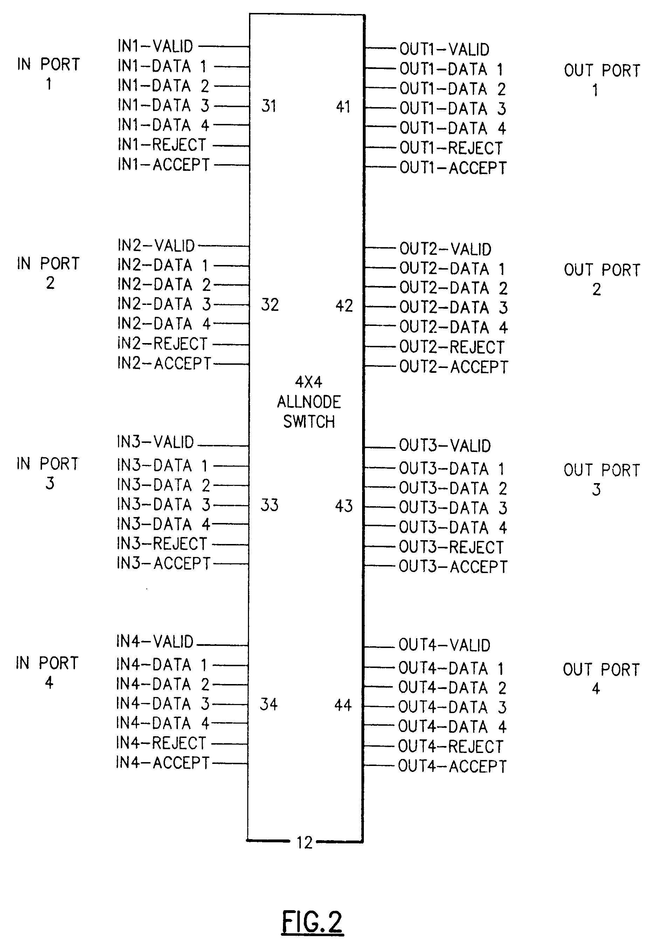

Figures 2 to 8 refer to a 4X4 crossbar implementation of the ALLNODE Switch to illustrate the principles and speed of the switching concept.

Referring to Figure 2, the preferred embodiment is a 4x4 switching apparatus 12, where the function of the present invention is to provide a means of connecting any of 4 sets of digital, analog, or optical inputs on a mutually exclusive basis to any one of the unused 4 output ports. The 4x4 switching apparatus 12 can support up to 4 simultaneous connections at any given time. For instance, Input 1 could be connected to Output 3, Input 2 to Output 4, Input 3 to Output 2, and Input 4 to Output 1.

The switching apparatus 12 is unidirectional, which means that data flows in only one direction across the said switching apparatus 12, that being from input to output. Switching apparatus 12 interfaces are defined in detail in Figure 2. The set of lines 31, 32, 33, and 34 at each in-port to the switching apparatus 12 are identical in number and function to the set of lines 41, 42, 43, and 44 at each out-port. The sets of interface lines to each input and output port contain seven unique signals: 4 digital data lines, and 3 digital control lines (VALID, REJECT, and ACCEPT). The signals at each port are differentiated by a prefix of INX- or OUTX- indicating the direction and number of the port (X) that they are associated with. The four digital data and one VALID lines have a signal flow in the direction going from input to output across switching apparatus 12, while the digital REJECT and ACCEPT control lines have a signal flow in the opposite direction.

Each unidirectional switch interface set requires only 7 signals, as shown in Figure 2, to transmit and control and data through the network 30 -- the digital data and control transfer width is 1/2 byte (4 bits) at a time. The signals required are:
- DATA:: 4 parallel signals used to command switch connectionsand transmit digital data messages or digital control headers.
- VALID:: When active, indicates that a digital message, control header, or analog waveform is in the process of being transmitted. When inactive, indicates a RESET command and causes all switches to reset to the IDLE state.
- REJECT:: Signal flow is in the opposite direction from the DATA and VALID signals. When active, it indicates that a REJECT or error condition has been detected.
- ACCEPT:: Signal flow is in the same direction as the REJECT signal. When in the low state, it indicates that a message is in the process of being received and checked for accuracy. When active, it indicates the message has been received correctly.

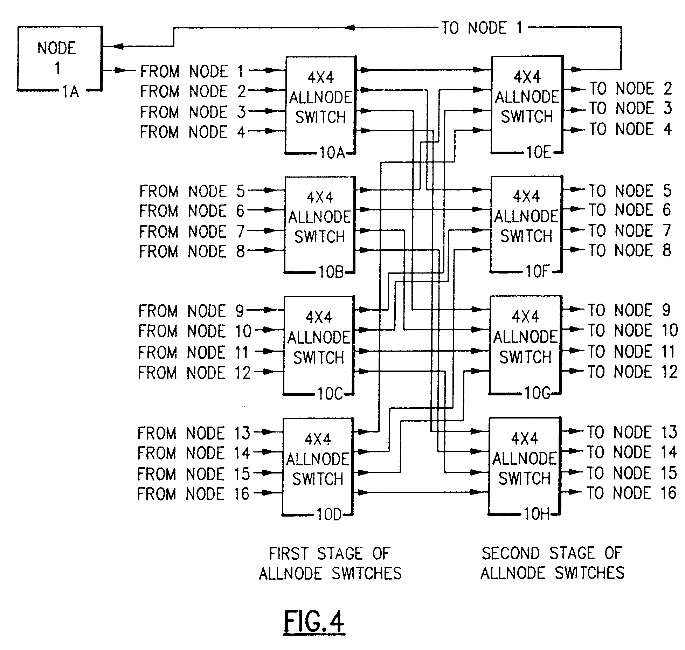

As illustrated by FIGURE 3 the ALLNODE switching apparatus would be provided for a node having a plurality of input and output ports, and would comprise the connection control circuit for each input port, and a multiplexer control circuit for each output port for connecting any of I inputs to any of Z outputs, where I and Z can assume any unique value greater or equal to two.

Figure 3 shows a 4x4 crossbar ALLNODE switching apparatus, where the ALLNODE switching apparatus 10 is unidirectional, which means that data flows in only one direction across the said switching apparatus 10, that being from input to output. Although the said switch apparatus 10 is unidirectional, it supports bidirectional communication amongst four nodes (20, 22, 24, and 26) by connecting the 4x4 ALL-NODE switching apparatus 10 as shown in FIGURE 3. Each node 20, 22, 24, and 26 has two sets of unidirectional interconnecting wires, one going to the switch 10 and one coming from the switch 10. The dashed lines internal to the switching apparatus 10 indicate that the function of the said switching apparatus is to connect an input port such as INPUT PORT 1 to one of four possible output ports. The switching apparatus 10 provides exactly the same function for each input port, allowing it to be connected to any unused output port.

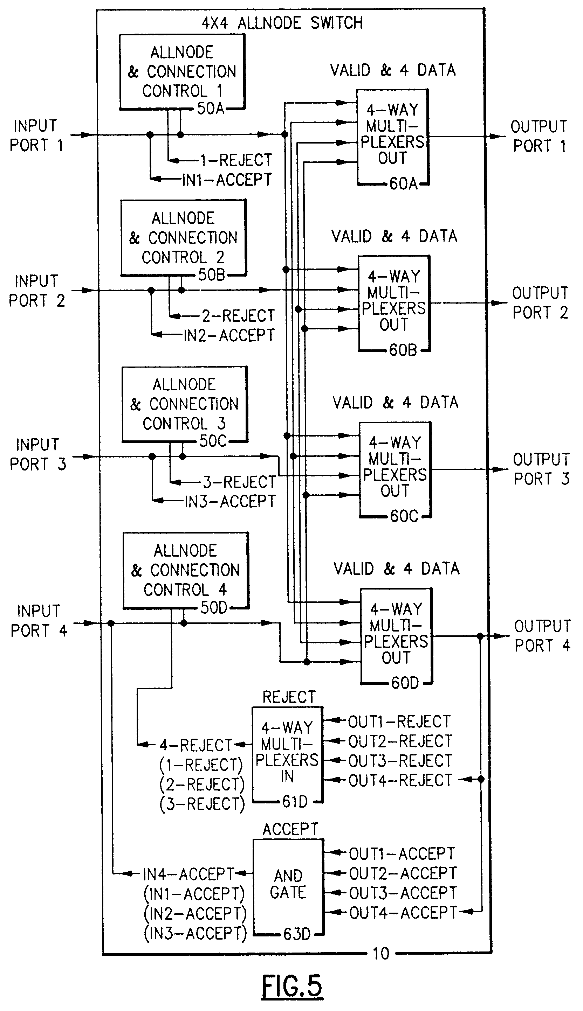

Referring to FIGURE 4, a method is illustrated for modularly increasing the number of nodes in a system by cascading eight switching apparatus 10 blocks. The eight cascaded switches are denoted as 10A through 10H to indicate that they are identical copies of switching apparatus 10, varying only in regards to the wiring of their input and output ports. It can be noted that any of sixteen nodes can communicate to any other node over a connection that passes through exactly two of the switching apparatus 10 blocks. For instance, Node 5 can send messages to Node 15 by traversing switch 10B and switch 10H. Since all connections are made through two switching apparatus 10 blocks, the network comprised of the eight switching apparatus 10 blocks is referred to as a two stage switching network. Other multi-stage networks can be configured from switching apparatus 10 blocks by using three stages, four stages, etc. in a similar manner. Thus, this network can be used to modularly increase the size of a parallel system comprised of PCs and/or workstations as nodes by simply changing the size of the switch network 30 and adding more PCs and/or workstations to interconnect to the expanded number of switch network ports.

Referring to FIGURE 5, a functional diagram of the simple data flow across ALLNODE switching apparatus 10 is illustrated. The VALID and four data lines at each input port, inside the switch, and at each output port are represented by a single line in FIGURE 5 for simplicity. For instance, the VALID and four data lines entering switch 10 at IN PORT 1 go to five internal functional blocks of switching apparatus 10; these are blocks 50A, 60A, 60B, 60C, and 60D. Block 50A makes the decision as to which of the four possible output ports are to be connected to input port 1. The VALID and four data lines from each input port go to each output multiplexer block (60A, 60B, 60C, and 60D); this makes it possible to connect any input port to any output port. Each of the four output multiplexer blocks (60A, 60B, 60C, and 60D) is uniquely commanded from each of the control blocks (50A, 50B, 50C, and 50D) as to which of the four possible sets of input port lines is to be gated through to each output port. For instance, control block 50A can command multiplexer 60C to connect input port 1 to output port 3; control block 50B can command multiplexer 60A to connect input port 2 to output port 1; and control block 50C can command multiplexers 60B and 60D to connect input port 3 in a multi-cast fashion to output port 2 and output port 4. All three connections are capable of being established simultaneously or at different times. At the same time that multiplexers 60A to 60D form connections to move the VALID and data signals across switch 10 with a unidirectional signal flow from input port to output port, multiplexer 61D and AND gate 63D form signal connections for the REJECT and ACCEPT signals, respectively, with a signal flow in the opposite direction of output port to input port (typical implementations are shown by blocks 61D and 63D -- similar blocks are associated with each input port). These REJECT and ACCEPT signals provide a positive feedback indication to switch 10 of actions taken either by subsequent switch 10 stages in a cascaded network or by the device receiving and interpreting the VALID and four data signals. A control header or digital message being transmitted through switching apparatus 10 over the four data signals under control of the VALID signal can be REJECTed by any network stage if it is unable to establish the commanded connection or by the receiving device if it is not capable of receiving the message at this time or if it detects an error in the transmission. The receiving device also has the capability of confirming the correct arrival of a command or message (without errors being detected) by pulsing the ACCEPT signal. Since the REJECT and ACCEPT signals go in the opposite direction from the data flow, they provide a means of reporting back a positive indication to the sender on whether the attempted transmission was received correctly or rejected.

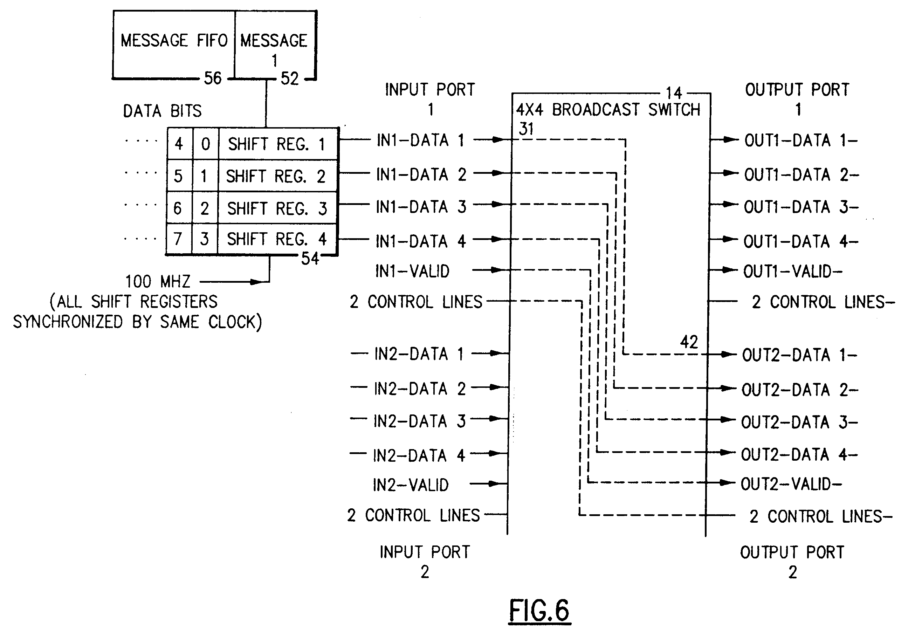

Referring to Figure 6, blocks 56, 52, and 54 illustrate a typical method for generating multi-line (parallel)/serial digital data in the form of a message which can be transmitted to and across switching apparatus 14, which is a partial drawing of the switching apparatus 12. Similar parallel/serial data generation logic as provided by 56, 52, and 54 can be used at each of the other input ports to switching apparatus 12. Each set of input data lines provides 4 serial data lines to a given input port which is synchronized to the same clock by the four shift registers 54 which create the parallel/serial data by shifting four synchronized lines of data 31 as controlled by the same identical clocking signal (100 MHZ in Fig.6). However, the four different input port sources (31, 32, 33, and 34) to switching apparatus 14 can be asynchronous to each other, being based on different, non-synchronized, 100 MHZ clocking signals.

The process for sending parallel/serial messages through switching apparatus 14 involves FIFO 56, which accumulates data messages to be transmitted. The next entire message to be transmitted is moved to buffer 52. The message stored in buffer 52 is moved to shift registers 54 in preparation for transmittal and the data is dispersed across the four shift registers 54 by placing data bit 0 into the first bit of shift register 1, data bit 1 into the first bit of shift register 2, data bit 2 into the first bit of shift register 3, data bit 3 into the first bit of shift register 4, data bit 4 into the second bit of shift register 1, etc. Shift registers 54 then begin to send serial data to switching apparatus 14 over four synchronized data lines, in such a manner that the parallel/serial data flows continuously until the entire message has been transmitted. The switch apparatus 14 uses the first eight bits transmitted (in the first two clock cycles of serial data over interface 31 from serial registers 54 to switching apparatus 14) to select and establish a connection path through the switching apparatus 14. The example in Figure 6 illustrates via dashed lines, the switching apparatus establishing a temporary connection between input port 1 (31) and output port 2 (42), such that each of the eight individual lines in interface 31 are uniquely and directly connected to each of the corresponding lines in interface 42.

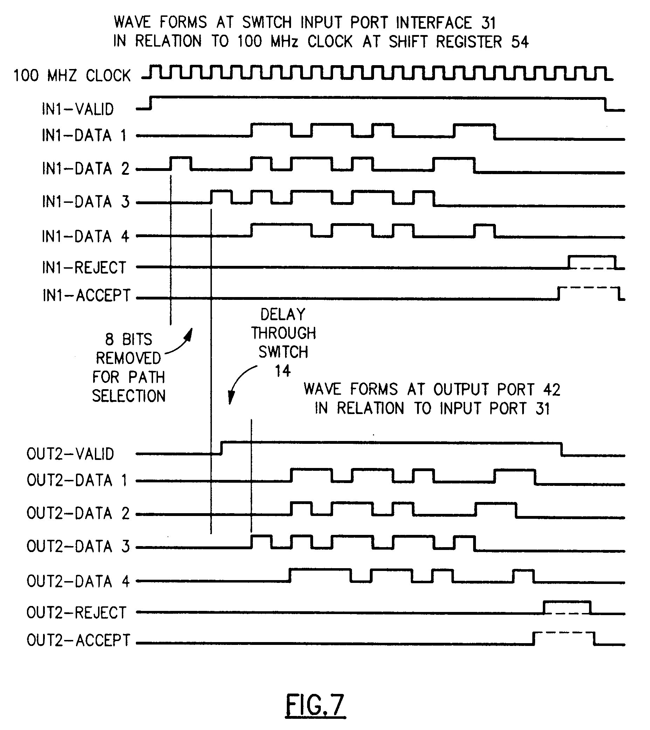

Referring to Figure 7, typical serial waveforms are shown for both input and output ports of the switching apparatus 14. The switch removes the first 8 bits of the serial transmission as sent by shift registers 54 and uses them to make and hold a connection, such as interface 31 to interface 42. The remainder of the serial message in our example is transferred directly from interface 31 to interface 42, so that interface 42 sees that exact same message that interface 31 receives, minus the first 8 bits and delayed by the circuit delays encountered by the serial data as it traverses the switching apparatus 14. Switching apparatus 14 does not buffer or re-clock the serial data entering via interface 31 in any manner; it merely reflects as quickly as possible the input waveforms it receives over interface 31 to output interface 42 without changing them in any way, except to strip off the first 8 bits.

The convention for indicating to a switch 14 input port over an interface (such as 31) that there is no transfer in progress, is to issue continuous IDLE commands, which are denoted by the 4 data lines and the VALID control line being held at logical 0's. The detection of a logical 1 on any of the input lines will signify the departure from the IDLE state and signify to the switch that a selection and transfer is beginning. Likewise, the output lines from the switch will be held in the IDLE state (at all 0's), when there is no active transfer in progress.

In general, all switches require a path selection method, whereby they are commanded which connection (input port to output port) to establish. For switching apparatus 10, the path selection command is transmitted to the switch over the same interface that the data is transferred; i.e., the 4 data lines associated with each input port. Selection information must be transferred prior to the data, so that the commanded interconnections can be established and the data can then flow to the commanded destination. The selection information need NOT identify an input port number (1 to 4), because it is arriving at the switch over a specific input and the switch already knows what input number it is receiving data on. Therefore, the selection information need ONLY specify the number (1 to 4) of which one of the four output ports of switching apparatus 10 to which to connect. The method of path selection recommended here is one out of N encoding with a return to zero (called a DEAD FIELD).

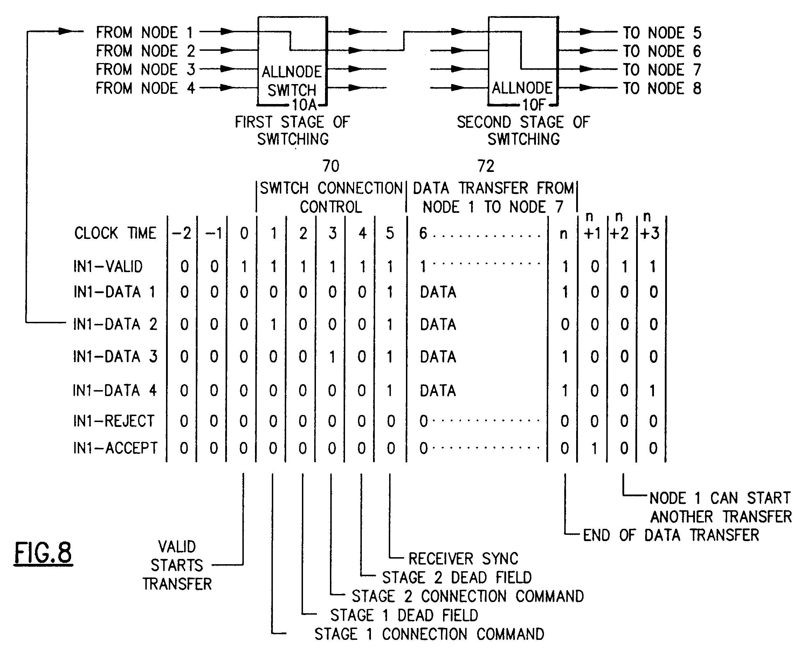

Referring to Figure 8, a typical example of the exact serial bit patterns and control signal activation is shown for sending control and digital data information to switching apparatus 10. The example references the cascaded, two stage switching network shown in Figure 4 and involves sending data across the network from node 1 through switching apparatus 10A and 10F to node 7. To make this connection, input port 1 must be connected to output port 2 of the first stage switching apparatus 10A, and input port 1 must be connected to output port 3 of the second stage switching apparatus 10F. The signal sequence that is sent to input port 1 to cause the desired connections in switching apparatus 10A and 10F is shown in Fig. 4. In the signal sequence of 1's and 0's, time advances from left to right, so that the values seen at clock time -2 arrive at switch 10A first, and the values at clock time -1 arrive second, etc. The values of the IN1-DATA and IN1-VALID lines are all zeroes and cause nothing to happen at switch 10A during times -2 and -1, because they indicate IDLE. At clock time 0, the IN1-VALID line goes to a logical 1. This prepares switch 10A by enabling the input port 1 to receive data, but no connection or action takes place at switch 10A at this time. The IN1-VALID control line basically enables the corresponding switch input port; when IN1-VALID is a logical 0, switch 10A cannot make any connections or receive any data from input port 1, which is held RESET. Finally, at clock time 1, switch 10A receives its command as to what output port to connect to; the command is received entirely during clock time 1.

The command bit pattern sent at clock time 1 is used by switch 10A to establish connection to an output port; this process is referred to as a path selection operation and takes place completely internal to switch 10A. The path selection approach implemented by the present ALL-NODE switch invention is to let each of the 4 IN1-DATA lines to define a unique output of switch 10A to be selected. For instance, IN1-DATA1 signal going to a logical 1 at time 1 tells switch 10A to connect to output port 1, IN1-DATA2 commands connection to output port 2, etc. In our example, since IN1-DATA2 goes to a logical 1 during clock time 1, switch 10A is thereby commanded to connect to output port 2. In other words, the connection algorithm is that the first data input line going to a logical 1 after an input port has been enabled, defines the connection which that input port is to make. This is a mutually exclusive process, in that for the normal case only one data line at clock time 1 is allowed to be a logical 1; the other 3 data lines must be 0's. Note that since 1 bit of selection information is guaranteed to be a logical 1, switch 10A will be able to recognize the start of a transmission without requiring any additional bits to signify that a transfer is commencing. The switch 10A makes the commanded connection by removing the 4 bits from the data lines and storing them in a selection register in control block 50A of Figure 8. The bits transmitted during clock time 1 are not passed through switch 10A to switch 10F, but instead switch 10A begins passing the very next 4 bits of data corresponding to clock time 2 to the next switch 10F. However, the information bits following a selection command (those transmitted by the 4 data lines at clock time 2 in our example) must always be all zeroes (a DEAD FIELD) as shown in Figure 8. The purpose of this will be explained subsequently.

At clock time 2, the connection of switch 10A input port 1 to output port 2 is established and causes the signal sequence at clock time 2 to be transmitted across switch 10A and the interconnecting wires to switch 10F input port 1. From this time on, switch 10A merely transmits all subsequent data immediately to switch 10F input port 1; it never examines or takes any action on any other data patterns presented to switch 10A over its input port 1 interface. It just passes all data patterns it receives over input port 1 immediately to the output port 2 and switch 10F. Thus, at clock time 2, assuming zero delay across switch 10A and its associated cable, switch 10F input port 1 sees the VALID signal rise and the all zeroes DEAD FIELD on the 4 data lines coming into switch 10F input port 1. In this way, at time 2, switch 10F input port 1 is enabled in an identical manner to the way switch 10A input port 1 was enabled previously at time 0.

In our example, IN1-DATA3 goes to a logical 1 during clock time 3 and switch 10F is thereby commanded to connect its input port 1 to its output port 3, in a manner similar to the way switch 10A was commanded to connect its input port 1 to its output 2 during clock time 1. The switch 10F in making the commanded connection, removes the 4 bits at clock time 3 from the data lines, and stores them in the selection register which is part of control block 50A of Figure 5. The bits transmitted during clock time 3 are not passed through switch 10F to Node 7, but instead switch 10F begins passing the very next 4 bits of data corresponding to clock time 4 to Node 7. However, the information bits following a selection command (those transmitted by the 4 data lines at clock time 4 in our example) must always be all zeroes (a DEAD FIELD) as shown in Figure 8. Thus, by clock time 4, switches 10A and 10F have established a connection path for transferring data directly from Node 1 to Node 7. Up to clock time 5, Node 7 sees nothing but IDLE commands. At time 4, Node 7 sees the OUT3-VALID line from switch 10F go active and is thereby enabled to start receiving data at time 5. From time 5 on, Node 7 can receive data from Node 1 over the 4 OUT3-DATA lines from switch 10F. The protocol of the actual data being transmitted can be any of the normal formats such as manchester encoded, 8/10 bit encoding with preamble, etc. However, the preferred embodient, as shown in Figure 8 is an all ones synchronization field at time 5, followed by the NRZ data message. The data message can specify the word count length of the transfer. The purpose of the synchronization field of all ones as a prefix to the actual data message, is to enable the receiving node 7 to synchronize to the sending node 1 in one clock time. This assumes that the two nodes involved in the data transfer have clocking systems that are asynchronous to each other, but are operating at the same frequency within a specified tolerance.

The preferred embodiment is to transmit the word count length of the message first during clock time 6 and clock time 7. Node 7 then decrements the length count and can detect when the transfer is complete. Node 7 can then check the message for accuracy using the selected error detection method (parity, ECC, or CRC). If the message has been received correctly, Node 7 responds by activating the ACCEPT interface line back to switch 10F at clock times n+1 and n+2. Switch 10F passes the ACCEPT indication back to switch 10A, which in turn returns it immediately to Node 1. This indicates to Node 1 that the transfer completed successfully, and Node 1 resets its VALID and 4 data lines to switch 10A to zeroes, thus, completing the data transfer and returning to the IDLE state. The IN1-VALID input line to switch 10A going to a zero at time n+3, causes switch 10A input port 1 to break its connection to output port 2 and to return to the IDLE state. Immediately, switch 10F sees its IN1-VALID input line go to a zero, breaks its connection to output port 3 and returns to the IDLE state. Thus, the connections can be broken and the switches returned to IDLE in as little as one clock time. If Node 1 has another message to transmit, it can load the next message into buffer 52 and shift registers 54 (Figure 6), and begin transmission to Node 7 or any other node as soon as time n+4. The only restriction is that the VALID signal generated by Node 1 must return to zero for a minimum of one clock time (time n+3) to signify the end of one transfer before beginning another.

If Node 7 finds an error in the message it has received after the word count has gone to zero at clock time n, it responds by activating the REJECT interface line (instead of ACCEPT) back to switch 10F. Switch 10F uses the incoming REJECT signal from Node 7 to break its connection to Node 7, to return to the IDLE state, and to pass the REJECT indication back to switch 10A, which in turn returns it immediately to Node 1 after breaking its connections and returning to IDLE. Node 1 then notes that the transfer has been rejected, and returns to the IDLE state by resetting its VALID and 4 data lines to switch 10A to zeroes. Node 1 may then retry the transmission by reloading shift registers 54 from buffer 52 and starting the transmission over again from the very beginning (clock time -1). The retransmission can occur over the identical path as the previously rejected transmission, or if alternate paths through the network are implemented another path can be tried. If continuous REJECTs are encountered, such that a specified number of REJECTs occur for the same message, an error reporting mechanism may be invoked.

It is also possible for any switch 10 in a network path to REJECT a message. This can occur for either of two cases:
1) BUSY - If the output port to which the switch is commanded to connect is BUSY (i.e., it is being used by a previously established connection), the switch will signify this condition to the input port issuing the command by activating the REJECT line back to the previous network stage or to the transmitter (if the first stage of the network detects BUSY). For instance, in the example shown in Figure 8, if 10A had received a command at clock time -2 to connect input port 4 to output port 2, that connection would have been active when input port 1 requested to be connected to output port 2 at clock time 1. In this case, output port 2 is BUSY at clock time 1 and switch 10A would activate the IN1-REJECT line to Node 1. As described above, the transmitter may retry any REJECTed message.
   Likewise, the connection could be made successfully at switch 10A, yet output port 3 of switch 10F could be BUSY at clock time 3, causing switch 10F to issue the REJECT signal to switch 10A. This, in turn, causes switch 10A to return REJECT immediately to Node 1 after breaking its connections and returning to IDLE.
2) Simultaneous CONTENTION - Rather than input port 4 establishing a connection to output port 2 in switch 10A at clock time -2 as described above (in advance of the same command from input port 1 at clock time 1), it is possible for two or more input ports to try to connect to the same output port at approximately the same time. This is called CONTENTION for an available output port. For instance, suppose input ports 1 and 4 both sent simultaneous commands at clock time 1 requesting to be connected to output port 2. The present invention i.e. the switch resolves this contention by first connecting both contending input ports 1 and 4 to output port 2. The net effect is to electrically connect the 2 input ports to output port 2, which will logically OR the signals coming from both sources. During clock time 2 the logical OR of the 2 input ports will NOT cause an error, because the values present on both input ports 1 and 4 are identical: the VALID lines for each are logical 1's and the data lines for each contain the DEAD FIELD (logical 0's). However, at clock time 3, the signals from each source could be different and an error could be caused if the 2 input ports both remained connected at clock time 3 and later. In other words, switch 10A has 1 cycle time (clock time 2) to correct the decision it made to connect two or more inputs to the same output. Switch 10A makes this correction during clock time 2 by detecting the fact that more than one input is connected to a given output. It then takes action by resetting all but one of the multiple connections, and does this before clock time 3 occurs. The decision of which connection(s) to reset and which one to keep is a decision based on priority. For the preferred embodiment, a simple priority scheme is used as follows: If input port 1 is contending it gets the connection, If input port 1 is not contending and input port 2 is, input port 2 gets the connection. If input ports 1 and 2 are not contending and input port 3 is, input port 3 gets the connection. Input port 4 gets the connection only if no other input port wants it. Applying the priority selection to our example, input port 1 gets to keep its connection to output port 2, while the connection of input port 4 to output port 2 is reset during clock time 2. This results in the REJECT signal being issued in the normal fashion from switch 10A to input port 4.

Thus, the purpose of the DEAD FIELD is to allow one clock time per switch stage to resolve simultaneous contention. The secondary purposes of the DEAD FIELD are to cause a falling edge on the selection bit which was active during the previous clock time, and to compensate for timing skew which might be present across the 4 data lines carrying serial selection data to the cascaded switches. Both the rise and fall of data bits commanding the switches to make connections gives the unclocked switch two clock edges (rise and fall) on which it can trigger and make decisions. These are the only two decision making times available to the ALL-NODE switch.

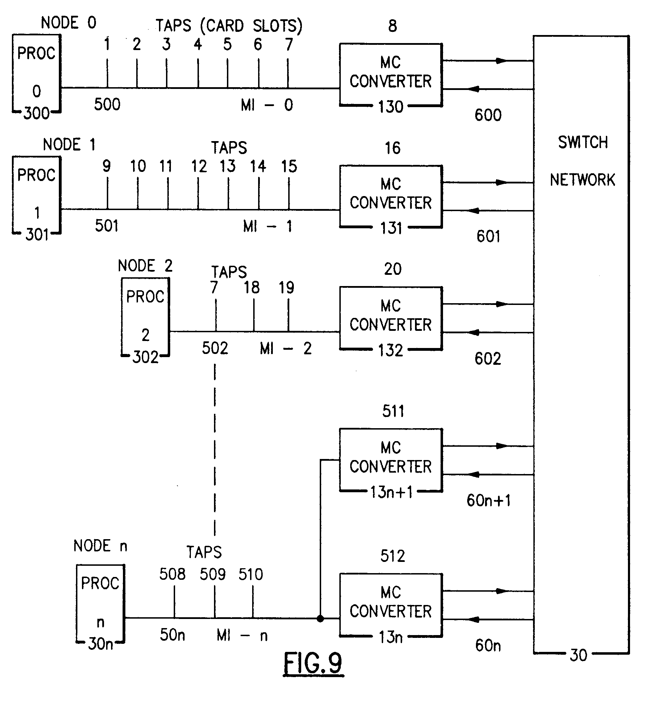

Referring to Figure 9, an alternative embodiment is shown, where any system node, such as node n, can implement multiple connections to the switch network 30. Figure 9 shows node n having two multiple paths to network 30. Each multiple path requires that a card slot be used to implement a MicroChannel converter function. Figure 9 shows that MCC 13n+1 has been added to card slot 511 to provide a second separate path 60n+1 from MicroChannel bus 50n to switch network 30. Any node can implement more than one path to network 30 to improve performance and reliability, regardless of whether the other nodes implement multiple paths or not. The maximum number of multiple paths from any node to network 30 is limited by the number of expansion card slots available at that node.

Clearly, the inventions which we have described by way of example and in illustration of our best mode of practicing the inventions in the various embodiments described provide a basis for much potential growth. Accordingly, it will be understood that those skilled in the art, both now and in the future, will envision further improvements even by way of invention, and these should be understood to be within the claimed scope which should be construed to protect and preserve the rights of the inventors.

## Claims

1. A switch-based personal computer interconnection apparatus comprising:
a switch interconnection network means for coupling multiple nodes asynchronously through input to output port connections in parallel;
a plurality of personal computers or workstations serving as nodes of a parallel system;
a plurality of nodal elements each comprised of a multi-drop bus structure and a means of transmitting data to said network;
a plurality of nodal elements capable of receiving data from said network into the said multi-drop bus structure;
a plurality of bus architecture converter means, each with the capability for adapting the standard bus architecture and protocol for a single multi-drop bus to the said switch network architecture and protocol; and
an expansion interface to the said switch network providing means of transmitting data to and from the said switch network.

2. The apparatus of claim 1, wherein the said switching network operates asynchronously in relation to input signals received at each input port, needs no clock input of any kind to perform its control functions of establishing connections, and employs no buffering of data messages of any kind.

3. The apparatus of claim 1 or 2, wherein each said nodal element implements a card slot group connected as taps to an individual bus structure, and has the capability of configuring nodal elements of varying characteristics depending upon the functions implemented by various expansion cards that are plugged into the said card slots.

4. The apparatus of one of claims 1 to 3, wherein each said nodal element implements a card slot group connected as taps to an individual bus structure that can vary in size from one to eight expansion card slots indepentently of any other nodel elements card slot requirements, and wherein each set of the said one to eight expansion card slots function as a single node of the system.

5. The apparatus of claim 4, wherein the said bus structure routes multi-drop bused data and control signals amongst the said attached set of one to eight expansion cards, where the said bus architecture converter means is resident on one expansion card that occupies any one of the said one to eight expansion card slots, for the purpose of connecting the bus structure to the said switch network to support parallel communication amongst other nodal elements.

6. The apparatus of claim 4, wherein the said bus structure routes multi-drop bused data and control signals amongst the said attached set of one to eight expansion cards, where the said bus architecture converter means is resident on more than one expansion card and can occupy any two or more of the said one to eight expansion card slots, for the purpose of connecting the bus structure to the said switch network over multiple paths to support parallel communication amongst other nodal elements.

7. The apparatus of one of claims 1 to 6, wherein the said switch network is comprised of individual switching apparatus devices having a connection control circuit for each input port and a multiplexer control circuit for each output port for the purpose of connecting any of I inputs to any of Z outputs, where I and Z can each assume any unique value greater than 2.

8. The apparatus of claim 1, wherein the said switch network is comprised of individual switching apparatus devices having a a set of interface signals having at least Z data lines and two control lines: one for the purpose of enabling and terminating data message transmissions and the second for signalling the rejection of a data message.

9. A switch-based personal computer interconnection apparatus comprising:
a switch interconnection network means for coupling multiple nodes asynchronously through input to output port connections in parallel;
a plurality of personal computers or workstations serving as nodes of a parallel system;
a plurality of nodal elements each comprised of a multi-drop bus multi-drop bus structure and a means of transmitting data to said network;
a plurality of nodal elements capable of receiving data from said network into the said multi-drop bus multi-drop bus structure;
a plurality of bus architecture converter means, each with the capability for adapting the multi-drop bus bus architecture and protocol for a single multi-drop bus to the said switch network architecture and protocol; and an expansion interface to the said switch network providing means of transmitting data to and from the said switch network.

10. The apparatus of claim 9, wherein the said switching network operates asynchronously in relation to input signals received at each input port, needs no clock input of any kind to perform its control functions of establishing connections, and employs no buffering of data messages of any kind.

11. The apparatus of claim 9 or 10, wherein each said nodal element implements a card slot group connected as taps to an individual multi-drop bus bus structure, and has the capability of configuring nodal elements of varying characteristics depending upon the functions implemented by various expansion cards that are plugged into the said multi-drop bus card slots.

12. The apparatus of one of claims 9 to 11, wherein each said nodal element implements a card slot group connected as taps to an individual multi-drop bus bus structure that can vary in size from one to eight expansion card slots indepentently of any other nodel elements card slot requirements, and wherein each set of the said one to eight expansion card slots function as a single node of the system.

13. The apparatus of claim 12, wherein the said multi-drop bus bus routes multi-drop bused data and control signals amongst the said attached set of one to eight expansion cards, where the said multi-drop bus bus architecture converter means is resident on one expansion card that occupies any one of the said one to eight expansion card slots, for the purpose of connecting the multi-drop bus bus to the said switch network to support parallel communication amongst other nodal elements.

14. The apparatus of claim 12, wherein the said multi-drop bus bus routes multi-drop bused data and control signals amongst the said attached set of one to eight expansion cards, where the said multi-drop bus bus architecture converter means is resident on more than one expansion card and can occupy any two or more of the said one to eight expansion card slots, for the purpose of connecting the bus structure to the said switch network over multiple paths to support parallel communication amongst other nodal elements.

15. The apparatus of one of claims 9 to 14, wherein the said switch network is comprised of individual switching apparatus devices having a connection control circuit for each input port and a multiplexer control circuit for each output port for the purpose of connecting any of I inputs to any of Z outputs, where I and Z can each assume any unique value greater than 2.

16. The apparatus of one of claims 9 to 15, wherein the said switch network is comprised of individual switching apparatus devices having a a set of interface signals having at least Z data lines and two control lines: one for the purpose of enabling and terminating data message transmissions and the second for signalling the rejection of a data message.
